# EUROPÄISCHE PATENTSCHRIFT

(11) **EP 2 614 564 B1**
(45) Veröffentlichungstag und Bekanntmachung des Hinweises auf die Patenterteilung: **13.08.2014**
(21) Anmeldenummer: 11761318.2
(22) Anmeldetag: 09.09.2011
(51) Int. Cl.: H02G 3/08

(54) **RAHMEN EINES KABELEINFÜHRUNGSSYSTEMS UND KABELTÜLLE HIERFÜR**
FRAME FOR A CABLE PENETRATION SYSTEM, AND BUSH THEREFOR
BÂTI POUR UN SYSTÈME D'INTRODUCTION DE CÂBLES ET PASSE-CÂBLE POUR CE BÂTI

(30) Priorität: 10.09.2010 DE 102010037463
(43) Veröffentlichungstag der Anmeldung: 17.07.2013
(73) Patentinhaber: Phoenix Contact GmbH & Co. KG, 32825 Blomberg (DE)
(72) Erfinder: SPRENGER, Dennis, 32805 Horn-Bad Meinberg (DE); DIEßEL, Thorsten, 32120 Hiddenhausen (DE)
(74) Vertreter: Michalski Hüttermann & Partner Patentanwälte
(86) Internationale Anmeldenummer: PCT/EP2011/065651
(87) Internationale Veröffentlichungsnummer: WO 2012/032157

(56) Entgegenhaltungen:
- EP-A2- 1 236 256
- WO-A1-2009/102262
- DE-A1-102007 012 190

## Beschreibung

Die Erfindung betrifft einen Rahmen eines Kabeleinführungssystems und entsprechende Kabeltüllen.

Aus dem Stand der Technik sind Kabeltüllen und Rahmen bekannt. Diese sind jedoch in der Handhabung fehleranfällig und montageunfreundlich.

Ein Beispiel hierfür sind die Kabeltüllen welche aus der EP 1 236 256 bekannt sind. Dort müssen vor Montage des Rahmens ausnahmslos alle Kabeltüllen montiert werden. Nachteilig ist weiterhin, dass die Stege eine flexible Belegung von Tüllen unterschiedlicher Durchmesser verhindert. Weiterhin nachteilig ist, dass der Rahmen Wartungsarbeiten erschwert, da ein Wechsel einer einzigen Kabeltülle bereits die Demontage des Rahmens erfordert. Kabeltüllen sind in DE 10 2007 012 190 A1 offenbart.

Diese Nachteile sind einzeln oder in Gruppen auch aus anderen Kabeltüllen und Rahmensystemen aus dem Stand der Technik bekannt.

Es ist daher Aufgabe der Erfindung einen Rahmen eines Kabeleinführungssystems und eine Kabeltülle hierfür bereitzustellen, der einen oder mehrere aus dem Stand der Technik bekannte Nachteile auf erfinderische Weise löst.

Die Aufgabe wird gelöst durch einen Rahmen eines Kabeleinführungssystems, wobei der Rahmen zur Aufnahme einer Vielzahl von Kabeltüllen vorgesehen ist. Der Rahmen weist mindestens eine vom Rahmen abgesetzte Leiste auf, welche eine geringere Höhe als der benachbarte Rahmen aufweist. Auf der Leiste sind Verbindungseinrichtungen angeordnet, welche zur Aufnahme geeigneter Verbindungseinrichtungsgegenstücke, welche an Kabeltüllen angeordnet sind, geeignet sind. Dabei sind die Verbindungseinrichtungen so angeordnet, dass sie im Wesentlichen nur eine Montage von Kabeltüllen im Rahmen in normaler Richtung zum Rahmen zulassen, wobei pro zu montierender Kabeltülle mindestens zwei Verbindungseinrichtungen auf der Leiste angeordnet sind.

In einer weiteren Ausführungsform der Erfindung entspricht der Abstand von einer ersten Verbindungseinrichtung zu einer zweiten benachbarten Verbindungseinrichtung, die unmittelbar benachbart zur ersten Verbindungseinrichtung auf der Leiste angeordnet ist, nicht dem Abstand der zweiten Verbindungseinrichtung zu einer dritten Verbindungseinrichtung, die unmittelbar benachbart zur zweiten Verbindungseinrichtung auf der Leiste angeordnet ist.

Gemäß einer weiteren Ausführungsform der Erfindung weist der Rahmen zwei vom Rahmen abgesetzte Leisten auf, wobei die Leisten an gegenüberliegenden Seiten des Rahmens angeordnet sind.

Gemäß noch einer weiteren Ausführungsform der Erfindung sind die Verbindungseinrichtung Ausstülpungen.

In einer weiteren Ausführungsform der Erfindung ist die Verbindungseinrichtung zylinderförmig oder kegelstumpfförmig.

In noch einer weiteren Ausführungsform der Erfindung ist der Rahmen aus mehreren Teilsegmenten zusammensteckbar. Gemäß einer weiteren Ausführungsform der Erfindung ist der Rahmen aus einem Kunststoff oder Metall hergestellt.

Gemäß noch einer weiteren Ausführungsform der Erfindung weist der Rahmen Befestigungseinrichtungen für eine Montage an einem Gehäuse auf.

Gemäß einer weiteren Ausführungsform der Erfindung weist der Rahmen eine oder mehrere Aufnahmen zur Aufnahme korrespondierender Ausstülpungen, welche an Kabeltüllen angeordnet sind, auf.

Gemäß noch einer weiteren Ausführungsform der Erfindung weist der Rahmen eine oder mehrere Öffnungen auf, welche zur Aufnahmen eines Stabilisierungselementes geeignet sind und welche zu Ausnehmungen am Rand von aufzunehmenden Kabeltüllen korrespondieren.

Die Aufgabe wird auch gelöst durch eine Kabeltülle eines Kabeleinführungssystems zur Aufnahme in einem Rahmen, wobei die Kabeltülle eine Hauptkörper aufweist, wobei in dem Hauptkörper eine durchgehende Öffnung von einer Oberseite zu einer Unterseite in normaler Richtung zur Aufnahme eines Kabels vorgesehen ist, wobei die Kabeltülle mindestens eine vom Hauptkörper seitlich abgesetzte Leiste aufweist, welche eine geringere Höhe als der benachbarte Hauptkörper aufweist, wobei auf der Leiste Verbindungseinrichtungen angeordnet sind, welche zur Aufnahme geeigneter Verbindungseinrichtungsgegenstücke, welche an einem Rahmen angeordnet sind, geeignet sind, wobei die Verbindungseinrichtungen so angeordnet sind, dass sie im Wesentlichen nur eine Montage der Kabeltülle im Rahmen in normaler Richtung zum Rahmen zulassen, wobei mindestens zwei Verbindungseinrichtungen auf der Leiste angeordnet sind.

In noch einer weiteren Ausführungsform der Erfindung weist der Hauptkörper an der Seite, die der Leiste gegenüber liegt, eine Abstützeinrichtung auf, welche in Eingriff mit einer gleichartigen, hierzu spiegelbildlich angeordneten Kabeltülle gebracht werden kann.

Gemäß einer weiteren Ausführungsform der Erfindung weist die Kabeltülle zwei vom Hauptkörper abgesetzte Leisten auf, wobei die Leisten an gegenüberliegenden Seiten des Hauptkörpers angeordnet sind.

Gemäß noch einer weiteren Ausführungsform der Erfindung sind die Verbindungseinrichtungen Ausnehmungen.

In einer weiteren Ausführungsform der Erfindung sind die Verbindungseinrichtungen zylinderförmige oder kegelstumpfförmige Ausnehmungen.

In noch einer weiteren Ausführungsform der Erfindung weist die Kabeltülle einen Schlitz auf, dergestalt, dass ein einfacherer Zugang zur durchgehenden Öffnung im Hauptkörper ermöglicht wird.

Gemäß einer weiteren Ausführungsform der Erfindung weist der Schlitz eine Stufe auf.

Gemäß noch einer weiteren Ausführungsform der Erfindung ist der Schlitz nicht durchgängig bis zur durchgehenden Öffnung und/oder nicht durchgehend von der Oberseite bis zur Unterseite.

In einer weiteren Ausführungsform der Erfindung ist an einem seitlichen Rand, welcher unmittelbar an der Seite mit der Leiste anschließt, eine Dichtlippe vorgesehen.

In einer weiteren Ausführungsform der Erfindung weist die Kabeltülle in normaler Richtung weitere Ausnehmungen auf.

Gemäß einer weiteren Ausführungsform der Erfindung ist die Kabeltülle aus einem elastischen Kunststoff gefertigt.

Gemäß noch einer weiteren Ausführungsform der Erfindung weist die Kabeltülle eine Ausstülpung auf der Leiste auf, wobei die Ausstülpung weiterhin geeignet ist in eine korrespondierende Aufnahme, welche am Rahmen angeordnet ist, aufgenommen zu werden.

In noch einer weiteren Ausführungsform der Erfindung weist die Kabeltülle eine oder mehrere Ausnehmungen am Rand zur Aufnahme eines Stabilisierungselementes auf.

Nachfolgend wird die Erfindung näher anhand der Figuren erläutert.

In den Figuren zeigt:
- Figur 1: einen Rahmen gemäß einer Ausführungsform der Erfindung und Kabeltüllen gemäß verschiedener Ausführungsformen der Erfindung,
- Figur 2: einen Rahmen gemäß einer Ausführungsform der Erfindung und Kabeltüllen gemäß verschiedener Ausführungsformen der Erfindung,
- Figur 3: eine Kabeltülle gemäß einer ersten Ausführungsform der Erfindung,
- Figur 4: eine Kabeltülle gemäß einer zweiten Ausführungsform der Erfindung,
- Figur 5: eine Kabeltülle gemäß einer dritten Ausführungsform der Erfindung,
- Figur 6: eine Kabeltülle gemäß einer vierten Ausführungsform der Erfindung in zwei Ansichten,
- Figur 7: eine Kabeltülle gemäß einer fünften Ausführungsform der Erfindung in zwei Ansichten,
- Figur 8: eine Kabeltülle gemäß einer sechsten Ausführungsform der Erfindung in zwei Ansichten,
- Figur 9: eine Kabeltülle gemäß einer siebten Ausführungsform der Erfindung in drei Ansichten,
- Figur 10: einen Rahmen gemäß einer Ausführungsform der Erfindung,
- Figur 11: eine Kabeltülle gemäß einer achten Ausführungsform der Erfindung, und
- Figur 12: ein Detail eines Rahmens gemäß verschiedener Ausführungsform der Erfindung.

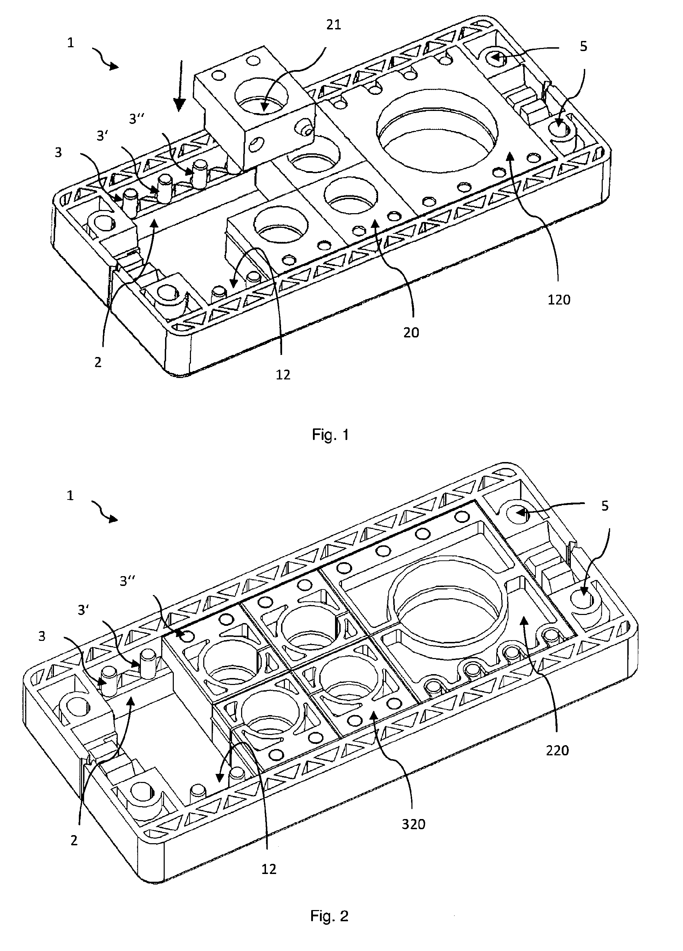

In Figur 1 ist ein Rahmen 1 eines Kabeleinführungssystems gemäß einer Ausführungsform der Erfindung und Kabeltüllen 20, 120 gemäß verschiedener Ausführungsformen der Erfindung gezeigt.

Der Rahmen 1 weist eine vom Rahmen abgesetzte Leiste 2 auf, welche eine geringere Höhe als der benachbarte Rahmen 1 aufweist. Weiterhin kann der Rahmen auch weitere abgesetzte Leisten, z.B. eine Leiste 12 aufweisen, welche ähnlich ausgestaltet ist.

Auf der Leiste 2 sind Verbindungseinrichtungen 3, 3', 3" angeordnet, welche zur Aufnahme geeigneter Verbindungseinrichtungsgegenstücke 23, 123, 223 geeignet sind.

Solche Verbindungseinrichtungsgegenstücke sind z.B. an den Kabeltüllen 20, 120 angeordnet,

Dabei sind die Verbindungseinrichtungen 3, 3', 3" so angeordnet, dass sie im Wesentlichen nur eine Montage von Kabeltüllen im Rahmen in normaler Richtung zum Rahmen zulassen. Diese Richtung ist durch den Pfeil angedeutet.

Durch die Anordnung der Verbindungseinrichtungen wird gewährleistet, dass ein einfaches Einsetzen von Kabeltüllen ermöglicht wird. Weiterhin kann der Rahmen ohne weiteres unterschiedliche Tüllen aufnehmen, so dass es keines speziellen Rahmens für unterschiedliche Tüllen mehr bedarf. Auch im Falle einer Demontage einer einzelnen Kabeltülle muss nun nicht mehr der gesamte Rahmen demontiert werden, sondern die Tülle kann aus dem Rahmen entnommen werden, z.B. wenn eine vorgenommen Klemmung oder Verspannung gelöst wird. Hierdurch werden die Flexibilität und die Montagefreundlichkeit erheblich erhöht.

Weiterhin erlaubt die Ausgestaltung auch einen guten Halt der Kabeltüllen 20, 120, 220 auf dem Rahmen. Dies kann durch eine geeignete Ausgestaltung der Verbindungseinrichtungen erreicht werden, so dass z.B. eine leichte Pressung zum Einsetzen nötig ist. Auch kann ein eingelegtes Kabel in eine Kabeltülle eine Verformung dergestalt herbeiführen, dass eine Klemmung der Verbindungseinrichtungen und der Verbindungseinrichtungsgegenstücke bewirkt wird.

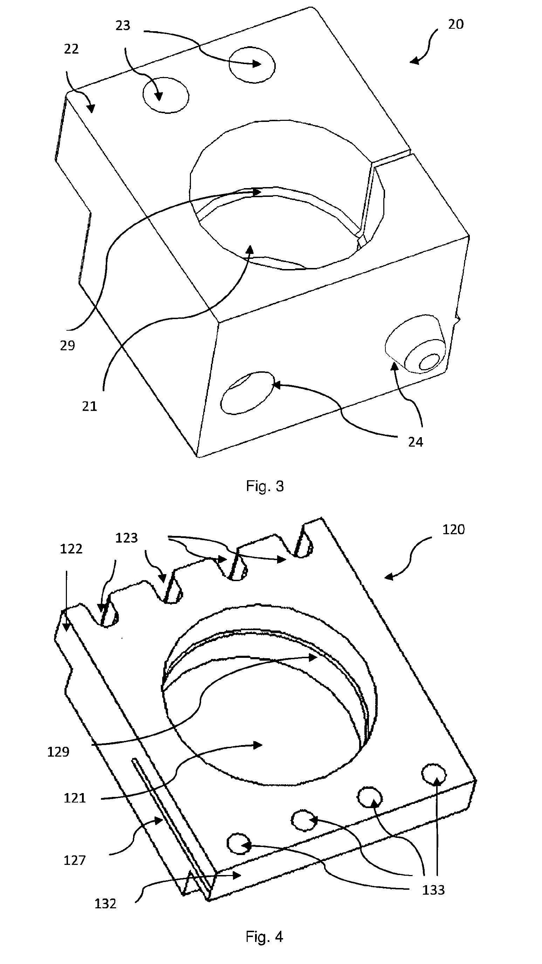

Die Kabeltülle 20 gemäß einer ersten Ausführungsform eines Kabeleinführungssystems zur Aufnahme in einem Rahmen 1 weist einen Hauptkörper auf. In diesem Hauptkörper ist eine durchgehende Öffnung 21 von einer Oberseite zu einer Unterseite in normaler Richtung zur Aufnahme eines Kabels vorgesehen. Eine solche Kabeltülle ist auch in Figur 3 im Detail dargestellt.

Weiterhin weist die Kabeltülle 20 eine vom Hauptkörper abgesetzte Leiste 22 auf, welche eine geringere Höhe als der benachbarte Hauptkörper aufweist.

Auf der Leiste sind Verbindungseinrichtungen 23 angeordnet, welche zur Aufnahme geeigneter Verbindungseinrichtungsgegenstücke 3, 3', 3" geeignet sind.

Solche Verbindungseinrichtungsgegenstücke sind z.B. an dem Rahmen angeordnet.

Dabei sind die Verbindungseinrichtungen 23 so angeordnet, dass sie im Wesentlichen nur eine Montage der Kabeltülle im Rahmen in normaler Richtung zum Rahmen zulassen. Diese Richtung ist durch den Pfeil angedeutet.

Weiterhin kann auch eine Kabeltülle 120 gemäß einer zweiten Ausführungsform im Rahmen 1 aufgenommen werden. Diese Kabeltülle 120 unterscheidet sich im Wesentlichen von der Kabeltülle 20 dadurch, dass sie zur Aufnahme dickerer Kabel geeignet ist. Eine solche Kabeltülle ist auch in Figur 4 im Detail dargestellt.

Die Kabeltülle 120 eines Kabeleinführungssystems zur Aufnahme in einem Rahmen 1 weist einen Hauptkörper auf. In diesem Hauptkörper ist eine durchgehende Öffnung 121 von einer Oberseite zu einer Unterseite in normaler Richtung zur Aufnahme eines Kabels vorgesehen.

Weiterhin weist die Kabeltülle 120 eine vom Hauptkörper abgesetzte Leiste 122, 132 auf, welche eine geringere Höhe als der benachbarte Hauptkörper aufweist.

Auf der Leiste sind Verbindungseinrichtungen 123, 223 angeordnet, welche zur Aufnahme geeigneter Verbindungseinrichtungsgegenstücke 3, 3', 3" geeignet sind.

Solche Verbindungseinrichtungsgegenstücke sind z.B. an dem Rahmen angeordnet.

Dabei sind die Verbindungseinrichtungen 123, 223 so angeordnet, dass sie im Wesentlichen nur eine Montage der Kabeltülle im Rahmen in normaler Richtung zum Rahmen zulassen.

In Figur 2 ist ein Rahmen 1 gemäß einer Ausführungsform der Erfindung und Kabeltüllen 220, 320 gemäß verschiedener Ausführungsformen der Erfindung gezeigt.

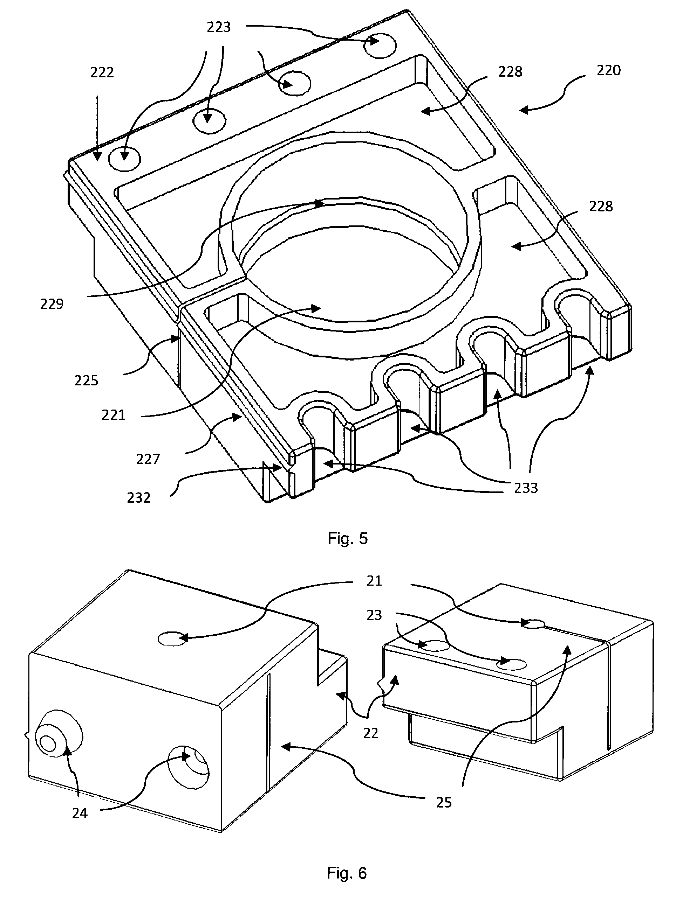

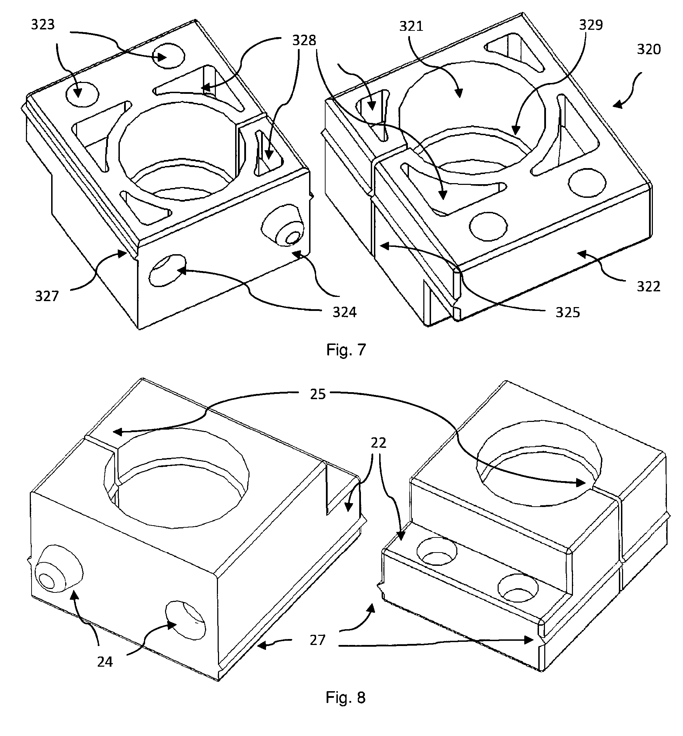

Eine Kabeltülle 220 gemäß einer dritten Ausführungsform ist auch in Figur 5 im Detail dargestellt. Eine Kabeltülle 320 gemäß einer vierten Ausführungsform ist auch in Figur 7 im Detail dargestellt.

Die Kabeltülle 320 weist eine vom Hauptkörper abgesetzte Leiste 322 auf, welche eine geringere Höhe als der benachbarte Hauptkörper aufweist.

Diese Kabeltüllen 220, 320 weisen - im Unterschied zu den Kabeltüllen 20, 120 - Ausnehmungen 228, 328 auf. Diese Ausnehmungen erlauben eine Materialersparnis. Weiterhin erlauben die Ausnehmungen 228 die Kraft auf eine geringere Fläche wirken zu lassen und den unteren Bereich flexibler zu gestalten was zu einer optimierten Abdichtung des Kabels führt.

Die Kabeltülle 220 dargestellt in Figur 5 weist einen Schlitz 225, die Kabeltülle 20 dargestellt in Figur 6, 8 und 9 einen Schlitz 25, und die Kabeltülle 320 dargestellt in Figur 7 einen Schlitz 325 auf. Der Schlitz ist dergestalt, dass ein einfacherer Zugang zur durchgehenden Öffnung 21, 121, 221 im Hauptkörper ermöglicht wird. Eine solche Anordnung erleichtert das Einlegen eines Kabels. Es versteht sich von selbst, dass der Schlitz auch an jeder anderen Seite angeordnet sein kann, insbesondere auch an einer Leistenseite oder an der Seite, die einer Leiste gegenüber liegt. Ist der Schlitz jedoch - wie in den Figuren 6-9 dargestellt - seitlich angeordnet, so kann hierdurch im eingebauten Zustand eine bessere Abdichtung erreicht werden.

Durch den Schlitz 25, 225, 325 kann ein Kabel in die Tülle eingelegt werden. Dieser kann sowohl durchgehend als auch an der Oberseite, z.B. für ca. 1mm, geschlossen sein.

Der Schlitz muss dabei nicht durchgehend von der Oberseite bis zur Unterseite sein, sondern kann auch nur in Teilbereichen ausgeführt sein, wie in Figur 6 exemplarisch dargestellt.

Der Schlitz 25 wird bei der nicht durchgehenden Ausführung erst durch das Einlegen eines Kabels aufgerissen. Der Schlitz 25 wird bei dieser Variante partiell ohne den fertigungsbedingten Materialverlust abgebildet was zu einer optimierten Abdichtung führt.

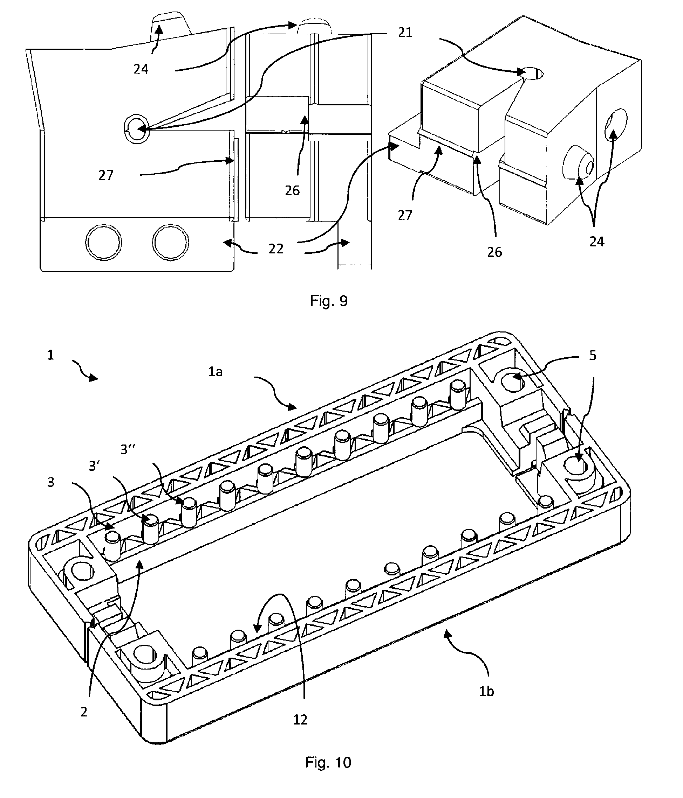

Weiterhin kann, wie in Figur 9 aufgeklappt dargestellt, der Schlitz eine Stufe 26 aufweisen. Durch diese Geometrie wird bei der montierten Kabeltülle 20 das Auftreten eines fertigungsbedingten Spaltes unterdrückt.

Eine solche Stufe 26 muss dabei nicht notwendigerweise eine Stufe mit einem rechten Winkel sein, sondern kann auch eine spitze Stufe sein, so dass sich eine Art Rinne auf beiden Seiten ausbildet. Stufen 26 erlauben eine verbesserte Abdichtung des Schlitzes 25. Dies kann unter Umständen nötig sein, um eine Zulassung für explosionsgefährdete Anlagen oder für Anwendungen in feuchten Umgebungen zu erlangen.

Weiterhin können die unterschiedlichen Ausführungsformen der Kabeltüllen auch mit einer inneren Dichtlippe 29, 129, 229, 329 versehen sein, die eine verbesserte Abdichtung eines eingelegten Kabels ermöglicht. Dies kann unter Umständen nötig sein, um eine Zulassung für explosionsgefährdete Anlagen oder für Anwendungen in feuchten Umgebungen zu erlangen.

Die innen umlaufende Dichtlippe 29, 129, 229, 329 wird durch das Komprimieren der Elemente in die Isolierung des Kabels gedrückt, was sowohl zur Abdichtung als auch zur Zugentlastung des Kabels dient.

Weiterhin können die Kabeltüllen an einem oder mehreren seitlichen Rändern auch über eine Dichtlippe 27, 127, 227, 327 verfügen. Zum Beispiel ist an den Kabeltüllen in Figuren 3-9 jeweils an einem seitlichen Rand, welcher unmittelbar an einer Seite mit der Leiste 22, 122, 132, 222, 232, 322 anschließen, zumindest abschnittsweise eine Dichtlippe vorgesehen.

Durch die Dichtlippe 27, 127, 227, 327 werden die Dichtelemente seitlich zueinander abgedichtet. Diese Dichtlippe 27, 127, 227, 327 können sowohl auf einer als auch in der Höhe versetzt auf beiden Seiten des Dichtelementes angebracht sein.

In besonders bevorzugter Weise sind auf dem Rahmen 1 pro zu montierender Kabeltülle 20, 120, 220, 320 mindestens zwei Verbindungseinrichtungen 3, 3', 3" auf der Leiste 2 und/oder 12 angeordnet.

In der Figur 1 sind beispielsweise pro Kabeltülle 20 zwei Verbindungseinrichtungen auf der Leiste 2 angeordnet. Pro Kabeltülle 120 sind vier Verbindungseinrichtungen auf der Leiste 2 angeordnet.

In Figur 2 wiederum sind pro Kabeltülle 320 zwei Verbindungseinrichtungen auf der Leiste 2 angeordnet. Pro Kabeltülle 220 sind vier Verbindungseinrichtungen auf der Leiste 2 angeordnet.

Ohne auf die vorbezeichneten Anzahlen beschränkt zu sein, können auch 3, 5 oder mehr Verbindungseinrichtungen vorgesehen sein, je nach Größe der Kabeltülle.

Besonders vorteilhaft ist es, wenn der Abstand von einer ersten Verbindungseinrichtung 3 zu einer zweiten benachbarten Verbindungseinrichtung 3', die unmittelbar benachbart zur ersten Verbindungseinrichtung 3 auf der Leiste 2 angeordnet ist, nicht dem Abstand der zweiten Verbindungseinrichtung 3' zu einer dritten Verbindungseinrichtung 3", die unmittelbar benachbart zur zweiten Verbindungseinrichtung 3' auf der Leiste 2 angeordnet ist, entspricht.

In diesem Fall kann eine einfache mechanische bzw. auch optische Kodierung vorgenommen werden, so dass eine Fehlmontage verhindert wird.

Weiterhin kann der Rahmen 1 so ausgeführt sein, dass er zwei vom Rahmen 1 abgesetzte Leisten 2, 12 aufweist, wobei die Leisten an gegenüberliegenden Seiten des Rahmens angeordnet sind.

In gleicher Weise kann dann auch die Kabeltülle 120, 220 zwei vom Hauptkörper abgesetzte Leisten 122, 132, 222, 232 aufweisen, wobei die Leisten 122, 132, 222, 232 an gegenüberliegenden Seiten des Hauptkörpers angeordnet sind, siehe Figur 4 und 5.

Die Verbindungseinrichtungen 3, 3', 3" auf dem Rahmen können beispielsweise als Ausstülpungen ausgeführt sein. Die Entsprechung hierzu sind die Verbindungseinrichtungsgegenstücke 23, 123, 133, 223, 233, 323 auf den Kabeltüllen.

Diese Ausstülpungen 3, 3', 3" können dabei jede geeignete Form aufweisen. Besonders bevorzugt ist es jedoch, wenn die Verbindungseinrichtung 3, 3', 3" zylinderförmig oder kegelstumpfförmig sind.

In gleicher Weise können die Verbindungseinrichtungsgegenstücke 23, 123, 133, 223, 233, 323 auf den Kabeltüllen jede geeignete Form aufweisen. Besonders bevorzugt ist es jedoch, wenn die die Verbindungseinrichtungsgegenstücke - aus der Sicht der Kabeltülle Verbindungseinrichtung - 23, 123, 133, 223, 233, 323 Ausnehmungen sind.

In besonders bevorzugter Weise sind die die Verbindungseinrichtungen 3, 3', 3" des Rahmens 1 zylinderförmig oder kegelstumpfförmig ausgeführt.

In gleicher besonders bevorzugter Weise sind die Verbindungseinrichtungsgegenstücke 23, 123, 133, 223, 233, 323 auf den Kabeltüllen 23, 123, 133, 223, 233, 323 als zylinderförmige oder kegelstumpfförmige 23, 123, 223, 323 oder zylindersegmentartige oder kegelstumpfsegmentartige 133, 233 Ausnehmungen ausgeführt.

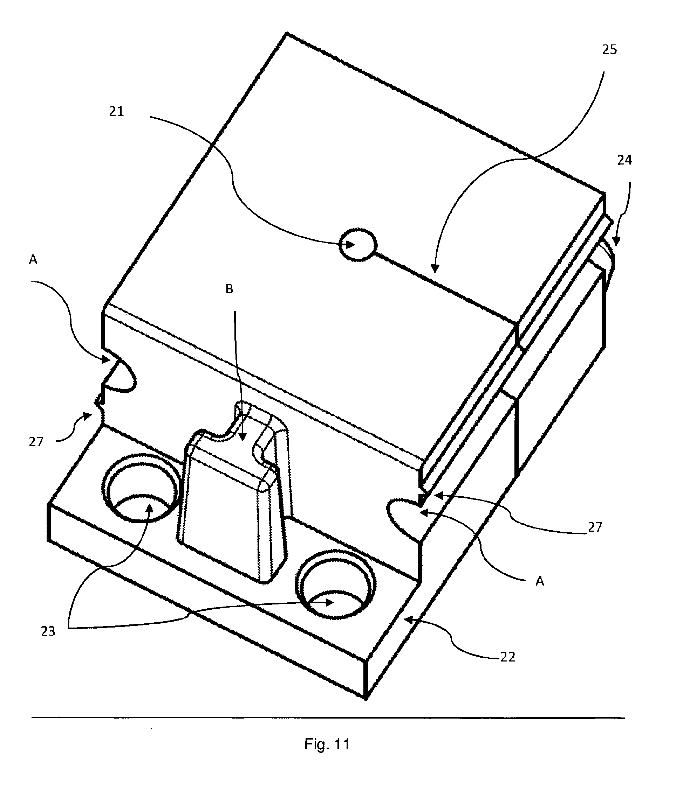

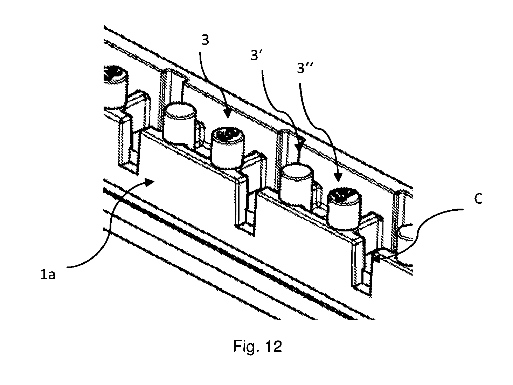

Weiterhin können die Kabeltüllen gemäß aller Ausführungsformen zusätzlich oder alternativ zu den Verbindungseinrichtungsgegenstücke 23, 123, 133, 223, 233, 323 auf den Kabeltüllen 23, 123, 133, 223, 233, 323 auch über Ausstülpungen B verfügen. Eine solche Ausstülpung B ist in Figur 11 beispielhaft gezeigt. Eine solche Ausstülpung B ist insbesondere dann vorteilhaft, wenn die vom Hauptkörper abgesetzte Leiste 22, 122, 132, 222, 232, 322 im Vergleich zum Hauptkörper eher dünn ist. Die Ausstülpung B ist beispielhaft T-förmig ausgeführt und stellt eine Stabilisierung in einer Ebene senkrecht zur Kabelrichtung (normale Richtung) dar. Dabei kann die Ausstülpung B sich zur abgesetzten Leiste hin verdicken, so dass das Einführen in geeignete Aufnahmen C auf einem Rahmen 1a - wie in Figur 12 dargestellt - besonders einfach bewerkstelligt werden kann und zudem eine Vorausrichtung in der Aufnahme C zur Verfügung gestellt wird. Weiterhin können die Kabeltüllen gemäß allen Ausführungsformen zusätzlich oder alternativ mit einer oder mehreren Ausnehmungen A am Rand ausgestattet sein. In diese Ausnehmungen A können Stabilisierungselemente nach Montage des Rahmens 1 und der Kabeltüllen aufgenommen werden, die dem Rahmen 1 bzw. den Kabeltüllen im Rahmen 1 zusätzliche Stabilität in Kabelrichtung (normale Richtung) verleihen. Dabei weist der Rahmen 1 bzw. seine Rahmenteile 1a, 1b dann auch entsprechende korrespondierende Öffnungen auf, sodass die Stabilisierungselemente einfach eingeführt werden können. Beispielsweise sind die Stabilisierungselemente stiftartig bzw. Schraubenartig ausgebildet. Weiterhin können die Kabeltüllen 20, 320 auch über Abstützeinrichtung 24, 324 verfügen.

Diese Abstützeinrichtung 24, 324 sind dabei so ausgeführt, dass diese am Hauptkörper an der Seite, die der Leiste gegenüber liegt, angeordnet sind.

Diese Abstützeinrichtung 24, 324 kann in Eingriff mit einer gleichartigen, hierzu spiegelbildlich angeordneten Abstützeinrichtung 24, 324 anderer Kabeltüllen gebracht werden, wie aus den Figuren 1 und 2 ersichtlich.

Durch Aufbringen von Abstützeinrichtung 24, 324 auf einer Seite der Kabeltüllen 20, 320 wird erreicht, dass die Kabeltüllen 20, 320 sich gegeneinander abstützen. Zum einen wird durch diese Stabilisierung ein Umklappen der Kabeltüllen 20, 320 nach innen erschwert und zum anderen bewirken die Abstützeinrichtungen 24, 324, dass sich die Kabeltüllen 20, 320 bei der Montage der beiden Hälften finden und somit die Montage erleichtert wird.

Wie in Figur 1, 2 und 10 dargestellt, kann der Rahmen 1 auch über Befestigungseinrichtungen 5 für eine Montage an einem Gehäuse verfügen. Diese Befestigungseinrichtungen 5 können beispielsweise als Bohrungen ausgeführt sein, so dass der Rahmen an einem Gehäuse verschraubt werden kann.

Weiterhin kann vorgesehen sein, dass der Rahmen 1 - wie in Figur 10 verdeutlicht - auch aus mehreren Teilsegmenten 1a, 1b bestehen, welche beispielsweise zusammensteckbar sind.

Hierdurch lassen sich in flexibler Weise auch Zwischenstücke einsetzen, so dass auch eine größere Anzahl von Kabeltüllen eingesetzt werden kann oder aber auch größere Kabeltüllen.

Die Verbindungseinrichtungen 3, 3', 3" gewährleistet dann, dass die Kabeltüllen 20, 120, 220, 320 - auch bei mehrteiliger Auslegung des Rahmens 1a, 1b - in einem der Teilsegmente 1a, 1b unverlierbar gehalten werden.

Es versteht sich von selbst, dass die Kabeltüllen gemäß den unterschiedlichen Ausführungsformen gemischt eingesetzt werden können.

Die Kabeltüllen gemäß der Erfindung können besonders einfach aus einem elastischen Kunststoff gefertigt werden. Ebenso kann der Rahmen 1 bzw. seine Rahmensegmente 1a, 1b aus Kunststoff oder einem Metall hergestellt sein.

Zusammenfassend kann festgehalten werden, dass die Erfindung es ermöglicht Rahmen und Tüllen bereitzustellen, welche ohne Zwischenstege gewährleisten, dass verschieden große Kabeltüllen 20, 120, 220, 320 in ein und derselben Variante eines Rahmens 1 montiert werden können.

Der Versatz zwischen den Verbindungseinrichtungen 3, 3', 3" kann als mechanische bzw. optische Kodierung dienen und somit eine Fehlmontage verhindern.

Durch Montage der Kabeltüllen 20, 120, 220, 320 in Richtung des Kabels, d.h. in normaler Richtung zum Rahmen, wird eine komfortable Montage und Demontage gewährleistet.

Weiterhin kann am Rahmen 1 bzw. an den Rahmensegmenten 1a, 1b wie in Figur 12 an den Verbindungseinrichtungen 3, 3" gezeigt eine optische und/oder haptische Markierung vorgesehen sein, so dass eine präzise und eindeutige Zuordnung möglich ist. Hierdurch wird der Aufbau und die Dokumentation als auch ein späterer Wechsel von Kabeln deutlich erleichtert, da bei geeigneter Dokumentation nun gezielt ein Kabel bzw. die zugehörige Kabeltülle aufgefunden werden kann.

**Bezugszeichenliste**

| | |
|---|---|
| Rahmen | 1 |
| Rahmenteilsegment | 1a, 1b |
| Leiste | 2, 12 |
| Verbindungseinrichtung | 3, 3', 3" |
| Befestigungseinrichtungen | 5 |
| Kabeltülle | 20, 120, 220, 320 |
| Öffnung | 21, 121, 221, 321 |
| Leiste | 22, 122, 132, 222, 232, 322 |
| Verbindungseinrichtungsgegenstücke | 23, 123, 133, 223, 233, 323 |
| Abstützeinrichtung | 24, 324 |
| Schlitz | 25, 225, 325 |
| Stufe | 26 |
| Dichtlippe | 27, 127, 227, 327 |
| Ausnehmungen | 228, 328 |
| Dichtlippe | 29, 129, 229, 329 |
| Ausnehmung | A |
| Ausstülpung | B |
| Aufnahme | C |

## Patentansprüche

1. Rahmen (1, 1a, 1b) eines Kabeleinführungssystems, wobei
der Rahmen zur Aufnahme einer Vielzahl von Kabeltüllen (20, 120, 220) vorgesehen ist,
**dadurch gekennzeichnet, dass**
der Rahmen mindestens eine vom Rahmen abgesetzte Leiste (2, 12) aufweist, welche eine geringere Höhe als der benachbarte Rahmen aufweist, wobei
auf der Leiste (2, 12) Verbindungseinrichtungen (3, 3', 3") angeordnet sind, welche zur Aufnahme geeigneter Verbindungseinrichtungsgegenstücke (23, 123, 223), welche an Kabeltüllen (20, 120, 220) angeordnet sind, geeignet sind, wobei
die Verbindungseinrichtungen (3, 3', 3") so angeordnet sind, dass sie im wesentlichen nur eine Montage von Kabeltüllen im Rahmen in normaler Richtung zum Rahmen zulassen, und wobei
pro zu montierender Kabeltülle mindestens zwei Verbindungseinrichtungen (3, 3', 3") auf der Leiste (2, 12) angeordnet sind.

2. Rahmen gemäß Anspruch 1, wobei der Abstand von einer ersten Verbindungseinrichtung (3) zu einer zweiten benachbarten Verbindungseinrichtung (3'), die unmittelbar benachbart zur ersten Verbindungseinrichtung (3) auf der Leiste (2) angeordnet ist, nicht dem Abstand der zweiten Verbindungseinrichtung (3') zu einer dritten Verbindungseinrichtung (3"), die unmittelbar benachbart zur zweiten Verbindungseinrichtung (3') auf der Leiste (2) angeordnet ist, entspricht.

3. Rahmen nach einem der vorhergehenden Ansprüche, wobei der Rahmen zwei vom Rahmen abgesetzte Leisten (2, 12) aufweist, wobei die Leisten an gegenüberliegenden Seiten des Rahmens angeordnet sind.

4. Rahmen nach einem der vorhergehenden Ansprüche, wobei die Verbindungseinrichtung (3, 3', 3") Ausstülpungen sind.

5. Rahmen nach einem der vorhergehenden Ansprüche, wobei der Rahmen (1, 1a, 1b) aus mehreren Teilsegmenten (1a, 1b) zusammensteckbar ist.

6. Rahmen nach einem der vorhergehenden Ansprüche, wobei der Rahmen (1, 1a, 1b) eine oder mehrere Aufnahmen (C) zur Aufnahme korrespondierender Ausstülpungen (B), welche an Kabeltüllen (20, 120, 220) angeordnet sind, aufweist.

7. Rahmen nach einem der vorhergehenden Ansprüche, wobei der Rahmen (1, 1a, 1b) eine oder mehrere Öffnungen aufweist, welche zur Aufnahmen eines Stabilisierungselementes geeignet sind und welche zu Ausnehmungen (A) am Rand von aufzunehmenden Kabeltüllen (20, 120, 220) korrespondieren.

8. Kabeltülle (20, 120, 220) eines Kabeleinführungssystems zur Aufnahme in einem Rahmen, wobei
die Kabeltülle einen Hauptkörper aufweist, wobei
in dem Hauptkörper eine durchgehende Öffnung (21, 121, 221) von einer Oberseite zu einer Unterseite in normaler Richtung zur Aufnahme eines Kabels vorgesehen ist,
dadurch gekennzeichet, dass
die Kabeltülle mindestens eine vom Hauptkörper seitlich abgesetzte Leiste (22, 122, 132, 222, 232, 322) aufweist, welche eine geringere Höhe als der benachbarte Hauptkörper aufweist, wobei
auf der Leiste Verbindungseinrichtungen (23, 123, 223) angeordnet sind, welche zur Aufnahme geeigneter Verbindungseinrichtungsgegenstücke (3, 3', 3"), welche an einem Rahmen angeordnet sind, geeignet sind, wobei
die Verbindungseinrichtungen (23, 123, 223) so angeordnet sind, dass sie im Wesentlichen nur eine Montage der Kabeltülle im Rahmen in normaler Richtung zum Rahmen zulassen.

9. Kabeltülle nach Anspruch 8, wobei der Hauptkörper an der Seite, die der Leiste gegenüber liegt, eine Abstützeinrichtung (24) aufweist, welche in Eingriff mit einer gleichartigen, hierzu spiegelbildlich angeordneten Kabeltülle gebracht werden kann.

10. Kabeltülle nach Anspruch 8, wobei die Kabeltülle zwei vom Hauptkörper abgesetzte Leisten (122, 132, 222,232) aufweist, wobei die Leisten an gegenüberliegenden Seiten des Hauptkörpers angeordnet sind.

11. Kabeltülle nach einem der vorhergehenden Ansprüche 8 bis 10, wobei die Verbindungseinrichtung (23, 123, 223) Ausnehmungen sind.

12. Kabeltülle nach einem der vorhergehenden Ansprüche 8 bis 11, wobei die Kabeltülle einen Schlitz (25, 225, 325) aufweist, dergestalt, dass ein einfacherer Zugang zur durchgehenden Öffnung (21, 121, 221) im Hauptkörper ermöglicht wird.

13. Kabeltülle nach einem der vorhergehenden Ansprüche 8 bis 12, wobei an einem seitlichen Rand, welcher unmittelbar an einer Seite mit der Leiste anschließen, zumindest abschnittsweise eine Dichtlippe (27, 127, 227, 327) vorgesehen ist.

14. Kabeltülle nach einem der vorhergehenden Ansprüche 8 bis 13, wobei die Kabeltülle eine Ausstülpung (B) auf der Leiste (22, 122, 132, 222, 232, 322) aufweist, welche geeignet ist in eine korrespondierende Aufnahme (C), welche am Rahmen (1, 1a, 1b) angeordnet ist, aufgenommen zu werden.

15. Kabeltülle nach einem der vorhergehenden Ansprüche 8 bis 14, wobei die Kabeltülle eine oder mehrere Ausnehmungen (A) am Rand zur Aufnahme eines Stabilisierungselementes aufweist.

## Claims

1. A frame (1, 1a, 1b) of a cable entry system, wherein
the frame is provided to receive a plurality of grommets (20, 120, 22),
**characterised in that**
the frame comprises at least one strip (2, 12) that is stepped with respect to the frame and has a lower height than the neighbouring frame, wherein
connecting devices (3, 3', 3") are arranged on the strip (2, 12), which are suited to receive suitable connecting device mating pieces (23, 123, 223) that are arranged on cable grommets (20, 120, 220), wherein
the connecting devices (3, 3', 3") are arranged such that they allow cable grommets to be installed in the frame substantially only in a direction that is normal relative to the frame, and wherein
at least two connecting devices (3, 3', 3") are arranged on the strip (2, 12) per cable grommet to be installed.

2. The frame according to Claim 1, wherein the distance from a first connecting device (3) to a second neighbouring connecting device (3'), which is arranged directly adjacent to the first connecting device (3) on the strip (2), does not correspond to the distance between the second connecting device (3') and a third connecting device (3"), which is arranged directly adjacent to the second connecting device (3') on the strip (2).

3. The frame according to one of the preceding claims, wherein the frame comprises two strips (2, 12) that are stepped with respect to the frame, wherein the strips are arranged on opposite sides of the frame.

4. The frame according to one of the preceding claims, wherein the connecting devices (3, 3', 3") are protuberances.

5. The frame according to one of the preceding claims, wherein the frame (1, 1a, 1b) can be plugged together from a number of sub-segments (la, 1b).

6. The frame according to one of the preceding claims, wherein the frame (1, 1a, 1b) comprises one or more seats (C) for receiving corresponding protuberances (B), which are arranged on cable grommets (20, 120, 220).

7. The frame according to one of the preceding claims, wherein the frame (1, 1a, 1b) comprises one or more openings, which are suited to receive a stabilising element and which correspond to cut-outs (A) at the edge of cable grommets (20, 120, 220) to be received.

8. A cable grommet (20, 120, 220) of a cable entry system to be received in a frame, wherein
the cable grommet comprises a main body, wherein
a through-opening (21, 121, 221) is provided in the main body from an upper face to a lower face in the normal direction so as to receive a cable,
**characterised in that**
the cable grommet comprises at least one strip (22, 122, 132, 222, 232, 322) that is stepped laterally with respect to the main body and has a lower height than the neighbouring main body, wherein
connecting devices (23, 123, 223) are provided on the strip, which are suited to receive suitable connecting device mating pieces (3, 3', 3") that are arranged on a frame, wherein
the connecting devices (23, 123, 223) are arranged such that they allow the cable grommet to be installed in the frame substantially only in a direction that is normal relative to the frame.

9. The cable grommet according to Claim 8, wherein the side of the main body that is located opposite the strip comprises a support device (24), which can be engaged in an identical cable grommet arranged laterally reversed thereto.

10. The cable grommet according to Claim 8, wherein the cable grommet comprises two strips (122, 132, 222, 232) that are stepped with respect to the main body, wherein the strips are arranged on opposite sides of the main body.

11. The cable grommet according to one of preceding Claims 8 to 10, wherein the connecting devices (23, 123, 233) are cut-outs.

12. The cable grommet according to one of preceding Claims 8 to 11, wherein the cable grommet comprises a slot (25, 225, 325) such that easier access is made possible to the through-opening (21, 121, 221) in the main body.

13. The cable grommet according to one of preceding Claims 8 to 12, wherein a sealing lip (27, 127, 227, 327) is provided at least in some regions on a lateral edge directly adjoining a side comprising the strip.

14. The cable grommet according to one of preceding Claims 8 to 13, wherein the cable grommet comprises a protuberance (B) on the strip (22, 122, 132, 222, 232, 322), the protuberance being suited to be received in a corresponding seat (C), which is provided on the frame (1, 1a, 1b).

15. The cable grommet according to one of preceding Claims 8 to 14, wherein the cable grommet comprises one or more cut-outs (A) at the edge to receive a stabilising element.

## Revendications

1. Cadre (1, 1a, 1b) d'un système d'insertion de câbles, dans lequel
le cadre est prévu pour l'accueil d'une multitude de passe-câbles (20, 120, 220),
**caractérisé en ce que**
le cadre comporte au moins une baguette (2, 12) étagée par rapport au cadre, présentant une hauteur inférieure à celle du cadre voisin, dans lequel
des dispositifs de liaison (3, 3', 3") sont agencés sur la baguette (2, 12), lesquels sont adaptés pour recevoir des contre-éléments des dispositifs de liaison (23, 123, 223) agencés sur les passe-câbles (20, 120, 220), dans lequel
les dispositifs de liaison (3, 3', 3") sont agencés de manière à ne permettre quasiment qu'un montage de passe-câbles dans le cadre dans la direction normale par rapport au cadre, et dans lequel
pour chaque passe-câbles à monter, au moins deux dispositifs de liaison (3, 3', 3") sont agencés sur la baguette (2, 12).

2. Cadre selon la revendication 1, dans lequel l'espacement entre un premier dispositif de liaison (3) et un deuxième dispositif de liaison (3') immédiatement voisin du premier dispositif de liaison (3) sur la baguette (2) ne correspond pas à l'espacement entre le deuxième dispositif de liaison (3') et un troisième dispositif de liaison (3") immédiatement voisin du deuxième dispositif de liaison (3') sur la baguette (2).

3. Cadre selon l'une des revendications précédentes, dans lequel le cadre comporte deux baguettes (2, 12) étagées par rapport au cadre, les baguettes étant agencées sur des côtés opposés du cadre.

4. Cadre selon l'une des revendications précédentes, dans lequel les dispositifs de liaison (3, 3', 3") sont des protubérances.

5. Cadre selon l'une des revendications précédentes, dans lequel le cadre (1, 1a, 1b) est assemblé par emboîtement à partir de plusieurs segments partiels (1a, 1b).

6. Cadre selon l'une des revendications précédentes, dans lequel le cadre (1, 1a, 1b) comporte une ou plusieurs admissions (C) destinées à recevoir des protubérances correspondantes (B), lesquelles sont agencées sur des passe-câbles (20, 120, 220).

7. Cadre selon l'une des revendications précédentes, dans lequel le cadre (1, 1a, 1b) comporte une ou plusieurs ouvertures appropriées pour recevoir un élément de stabilisation, et correspondant avec des évidements (A) dans le bord de passe-câbles (20, 120, 220) à accueillir.

8. Passe-câble (20, 120, 220) d'un système d'insertion de câble pour, destiné à être accueilli dans un cadre, dans lequel
le passe-câble comporte un corps principal, dans lequel
une ouverture traversante (21, 121, 221) est prévue dans le corps principal, allant d'un côté supérieur jusqu'à un côté inférieur dans la direction normale, pour la réception d'un câble,
**caractérisé en ce que**
le passe-câble comporte au moins une baguette (22, 122, 132, 222, 232, 322) étagée latéralement par rapport au corps principal, laquelle présente une hauteur inférieur à celle du corps principal voisin, dans lequel
des dispositifs de liaison (23, 123, 223) sont agencés sur la baguette, lesquels sont appropriés pour recevoir des contre-éléments de dispositif de liaison (3, 3', 3") agencés sur un cadre, dans lequel
les dispositifs de liaison (23, 123, 223) sont agencés de manière à ne permettre quasiment qu'un montage du passe-câble dans le cadre dans la direction normale par rapport au cadre.

9. Passe-câble selon la revendication 8, dans lequel le corps principal comporte un dispositif d'appui (24) du côté opposé à la baguette, lequel peut être mis en prise avec un passe-câble similaire, agencé symétriquement à cette fin.

10. Passe-câble selon la revendication 8, dans lequel le passe-câble comporte deux baguettes (122, 132, 222, 232) étagées par rapport au corps principal, dans lequel les baguettes sont agencées sur des côtés opposés du corps principal.

11. Passe-câble selon l'une des revendications précédentes 8 à 10, dans lequel les dispositifs de liaison (23, 123, 223) sont des évidements.

12. Passe-câble selon l'une des revendications précédentes 8 à 11, dans lequel le passe-câble comporte une fente (25, 225, 325) conçue de manière à faciliter l'accès à l'ouverture traversante (21, 121, 221) dans le corps principal.

13. Passe-câble selon l'une des revendications précédentes 8 à 12, dans lequel au moins une lèvre d'étanchéité (27, 127, 227, 327) est prévue sur un bord latéral immédiatement consécutif à la baguette d'un côté.

14. Passe-câble selon l'une des revendications précédentes 8 à 13, dans lequel le passe-câble comporte une protubérance (B) sur la baguette (22, 122, 132, 222, 232, 322) appropriée pour être admise dans une admission (C) correspondante agencée sur le cadre (1, 1a, 1b).

15. Passe-câble selon l'une des revendications précédentes 8 à 14, dans lequel le passe-câble comporte un ou plusieurs évidements (A) dans le bord, pour la réception d'un élément de stabilisation.
